# EUROPEAN PATENT SPECIFICATION

(11) **EP 0 492 483 B1**
(45) Date of publication and mention of the grant of the patent: **28.06.1995**
(21) Application number: 91121880.8
(22) Date of filing: 23.12.1991
(51) Int. Cl.: A23K 1/16

(54) **Compositions containing 1 or more N-[phenyl-(thioxomethyl)]-morpholine derivative(s) and the use of these compounds**
1 oder mehrere N-[Phenyl-(thioxomethyl)]-morpholinderivat(e) enthaltende Zusammensetzungen und ihre Verwendung
Compositions contenant 1 ou plusieurs dérivé(s) de N-[phényl-(thioxométhyl)]-morpholine et leur utilisation

(30) Priority: 22.12.1990 HU 844890
(43) Date of publication of application: 01.07.1992
(73) Proprietor: EGIS GYOGYSZERGYAR, Budapest X (HU)
(72) Inventor: Budai, Zoltán, Dr., H- Budapest II (HU); Mezei, Tibor, Dr., H-1221 Budapest (HU); Reiter, Klára, Dr. née Esses, H-1022 Budapest (HU); Fekete, Lajos, Dr., H-1165 Budapest (HU); Magyar, Károly, Dr., H-1012 Budapest (HU); Nagy, Attila, Dr., H-1031 Budapest (HU); Puskás, László, Dr., H-113 Budapest (HU)
(74) Representative: Beszédes, Stephan G., Dr.

(56) References cited:
- EP-A- 0 080 296
- BE-A- 693 882
- PATENT ABSTRACTS OF JAPAN vol. 5, no. 62 (C-52)(734) 25 April 1981
- ARZNEIMITTEL FORSCHUNG. vol. 32, no. 5, 1982, AULENDORF DE pages 518 - 521; M. TONINI ET AL.: 'Motor responses of rat stomach in vitro after subacute oral administration of Trithiozine'
- CHIMICA THERAPEUTICA. vol. 8, no. 4, 1973, FR pages 462 - 465; G. PIFFERI ET AL.: 'Research on 3,4,5-trimethoxybenzamides. Note III. Synthesis and CNS depressant activity of new alkoxythiobenzamides' Compound No. 2d

## Description

This invention is concerned with the new use of compositions containing 1 or more N-[phenyl-(thioxomethyl)]-morpholine derivative(s).

It is known that the compounds of the general formula 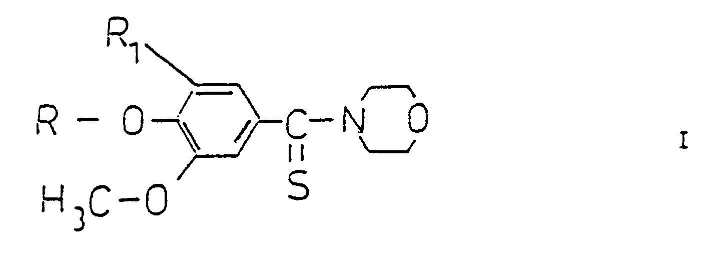
wherein
- R₁: represents methoxy or hydrogen and
- R: stands for methyl
or
- R and R₁: each denotes hydrogen
or
- R₁: stands for hydrogen and
- R: represents ethyl,
possess choleretic and ulcus-secretion inhibiting properties (Jpn. Kokai Tokkyo Koho: 8112.315; Eur. J. Med. Chem. Chim. Ther. 14, [1979], pages 27 to 31; BE-A 693 882; PATENT ABSTRACTS OF JAPAN, vol. 5, no. 62 (c-52)(734), 25 April 1981 [JP-A-5612316]; Arzneimittel-Forschung, vol. 32, no. 5, 1982, pages 518 to 521, (NS depressant activity (CHIMICA THERAPEUTICA, vol, 8, no. 4, 1973, pages 462 to 465 and JP-A-5612315). Such also have been used as starting materials for preparing other pharmaceutically active compounds (EP-A 80 296). In none of the references such compounds have been used in admixture with carriers, diluents or additives generally used in the production of fodder additives and fodders.

The problem underlying to the invention is to create the new use of compositions in the production of fodder additives and fodders, particularly feed additives and concentrates, premixes and ready-for-use fodders, which have superior properties of increasing the weight gain and improving feed utilization of domestic animals.

Surprisingly this has been solved by the invention.

The subject matter of the invention is the use of compositions, which is characterized in that they contain 1 or more substituted N-[phenyl-(thioxomethyl)]-morpholine derivative(s) of the general formula 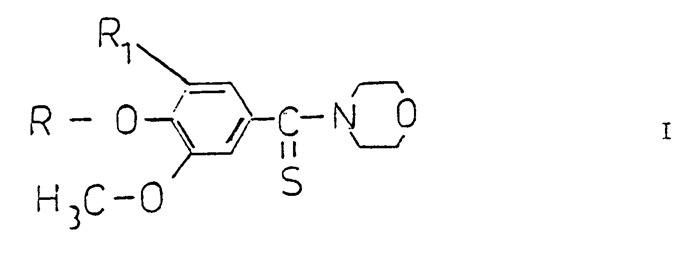
wherein
- R₁: represents methoxy or hydrogen and
- R: stands for methyl
or
- R and R₁: each denotes hydrogen
or
- R₁: stands for hydrogen and
- R: represents ethyl,
and/or acid addition salt(s) thereof as active ingredient(s) in admixture with 1 or more inert solid and/or liquid carriers(s) and/or diluent(s) and optionally 1 or more additive(s), for the production of fodder additives and fodders.

Individual compositions used according to the invention are such ones containing 4-{[3',4',5'-tri-(methoxy)-phenyl]-thioxomethyl}-morpholine of formula 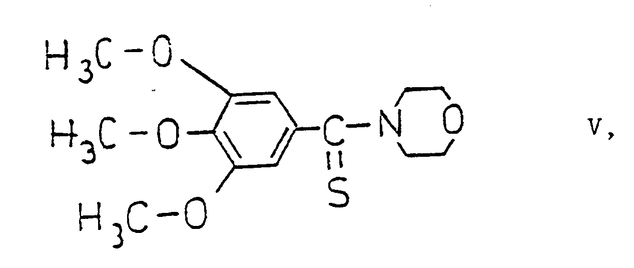
4-{[4'-(hydroxy)-3'-(methoxy)-phenyl]-thioxomethyl}-morpholine of formula 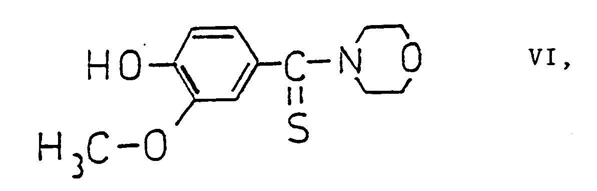
4-{[3',4'-di-(methoxy)-phenyl]-thioxomethyl}-morpholine of formula 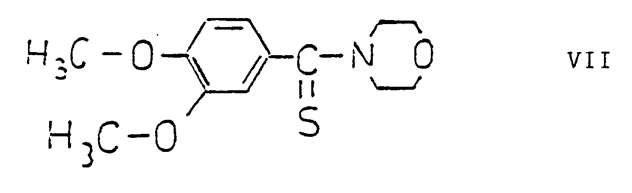
and/or 4-{[4'-(ethoxy)-3'-(methoxy)-phenyl]-thioxomethyl}-morpholine of formula 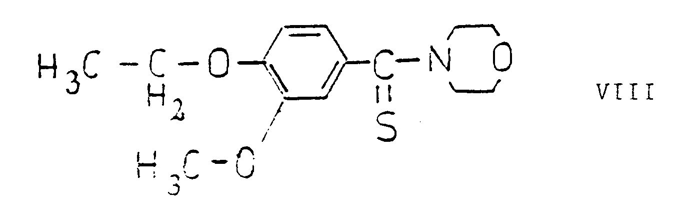
as N-[phenyl-(thioxomethyl)]-morpholine derivative(s).

The known active principles of the general formula I of the compositions used according to the invention can be prepared as follows:
a) reacting a substituted benzaldehyde of the general formula 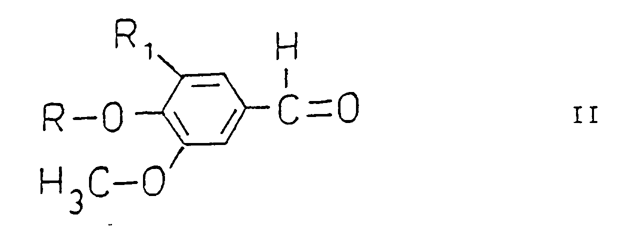 wherein
   R and R₁ are as stated above,
   with morpholine and sulphur, or
b) reacting a substituted thiobenzoic acid of the general formula 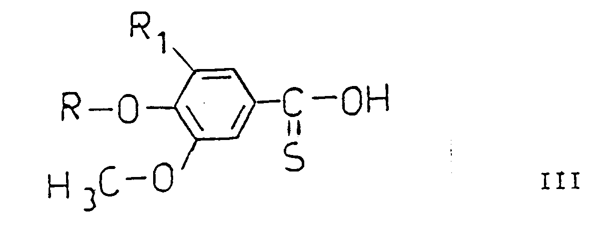 wherein
   R and R₁ are as stated above,
   or a reactive derivative thereof with morpholine or
c) reacting a morpholide of the general formula 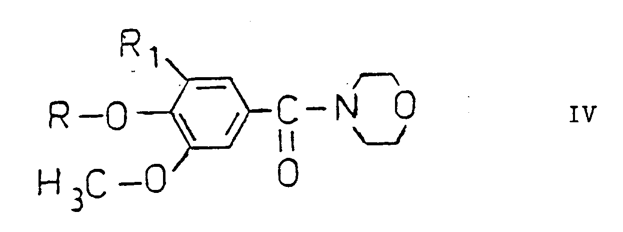 wherein
   R and R₁ are as stated above,
   with a thionating agent
and, if desired, in a compound of the general formula I, in which R represents hydrogen, obtained according to any of process variants a) to c) methylating or ethylating the respective hydroxy group, particularly by reacting a compound of the general formula I, wherein R stands for hydrogen, obtained according to any of process variants a) to c) with a halogenide of the general formula

R₂-Hlg V

wherein
- Hlg: represents halogen and
- R₂: stands for methyl or ethyl,
and/or, if desired, in a manner known per se, converting the obtained compound of the general formula I into an acid addition salt or if desired, converting the acid addition salt of the compound of formula I into the free base of formula I and/or into another acid addition salt.

In variant a) of this process for the reaction of the aldehyde of the general formula II with morpholine and sulphur advantageously the molar ratio of the aldehyde, morpholine and sulphur is chosen to be 1 : 2 : 1, but for a good reaction also one of them may be applied in a slight excess.

Suitably the reaction is performed at elevated temperatures. Preferably a reaction temperature of 40°C to 160°C, particularly about 120°C, is applied. Furthermore it is preferred to carry out the reaction without using any solvent, in melt.

The time of the reaction depends on the temperature and may vary between wide ranges. If the reaction is carried out at a relatively low temperature, e.g. at 60°C, the time of reaction may be as long as 50 to 60 hours. At a relatively high temperature, e.g. 140°C, the reaction may be accomplished within 0.5 to 0.8 hour. At 120°C the optimum reaction time is 1 hour.

The substituted N-[phenyl-(thioxomethyl)]-morpholine derivatives of the general formula I can be isolated from the reaction mixture by known methods after adding a solvent, e.g. by crystallization after cooling or by evaporation.

In variant b) of the said process the reaction of the substituted thiobenzoic acid of the general formula III with morpholine is preferably carried out with the former after having been activated to a reactive derivative.

The activation of the substituted thiobenzoic acid of the general formula III can be carried out in different ways. It is preferable to convert it into the corresponding halide with a halogenating agent, such as phosphorus pentachloride, phosphorus trichloride oxide or thionyl chloride. The halide thus obtained then may be reacted with the morpholine in the presence of an acid-binding agent. The reaction is preferably carried out in a solvent inert toward the reactants. As solvents aromatic hydrocarbons, e.g. toluene, benzene and/or [a] xylene(s), and/or ethers, such as tetrahydrofurane and/or diisopropyl ether, can be used. The morpholine used as reagent may serve as acid-binding agent, but organic and/or inorganic bases can also be applied for the same purpose. As organic base e.g. piperazine, triethylamine and/or ammonia, and as inorganic base e.g. 1 or more alkali hydroxide(s), carbonate(s) and/or hydrogen carbonate(s) may be used. As reactive acid derivatives anhydrides, mixed anhydrides, e.g. chloroformates, or esters, e.g. alkyl esters may also be used. Thus according to a preferred embodiment of the said process as a reactive derivative of the substituted thiobenzoic acid of the general formula III an acid halide, acid anhydride, mixed anhydride or ester is used the first one being particularly preferred.

In variant c) of the said process for the reaction of the morpholide derivative of the general formula IV with the thionating agent as the latter preferably diphosphorus pentasulfide is used. Furthermore it is preferred to carry out this reaction in a solvent inert toward the reactants, particularly in pyridine, at an elevated temperature, particularly at temperatures from 40 to 160°C, most particularly at the boiling point of the solvent applied.

Preferably the optional alkylation, alkenylation or alkynylation, respectively, of a compound of the general formula I, wherein R stands for hydrogen, obtained according to any of process variants a) to c) with the halogenide of the formula V is carried out with the corresponding chloride or bromide as halogenide by methods known per se. Moreover it is preferred to work in the presence of a basic condensing agent. For this purpose suitably 1 or more alkali carbonate(s), e.g. sodium and/or potassium carbonate, alkali hydrogen carbonate(s) and/or alkali alcoholate(s) can be used. Particularly preferred is the use of potassium carbonate. The reaction is preferably performed under heating. It is particularly preferable to keep the reaction mixture boiling while using a reflux condenser.

The substituted benzaldehydes of the general formula II used as starting compounds are known from the literature (J. Prakt. Chem. 318 [1976] (5), pages 785 to 794). The substituted thiobenzoic acid derivatives of the general formula III used as starting materials can be prepared as described in US patent specification No. 1,855,454. The morpholides of the general formula IV used as starting materials can be prepared according to the method of Example 3 of the European patent application based on Hungarian patent application of December 22, 1990 having the Serial No. 8447/90 simultaneously filed.

The above reactions are known from the literature (e.g. EUR. J. Med. Chem.-Chim Ther. 14 [1979], pages 27 to 31).

As already mentioned, the compositions used according to the invention possess useful weight-gain increasing properties on domestic animals, particularly on pig, accompanied by a valuable fodder-utilization improving effect. Hence by the invention specially there is provided for the use of the compositions in animal husbandry.

The weight-gain increasing and fodder-utilization improving effects of the compounds contained in the compositions used according to the invention are shown by the following test:
Pigs are used as test animals. Each animal group consists of 6 pigs and each test with 6 pigs is repeated 3 times. The fodder contains 50 mg/kg of the test compound of the general formula I of a composition used according to the invention. The animals are fed under identical conditions and all the animal groups receive the same amount of fodder having the same composition. The animals of the reference group are fed with the same fodder except that the fodder contains Flavomycine (comparative material) instead of the compound of the general formula I. The animals of the control group receive the same fodder but to which neither a test compound of the general formula I nor the comparative material Flavomycine is added. The results are summarized in the Table.

**Table**

| Test compound | Average daily weight-gain related to the control | Weight of fodder required to obtain 1 kg of weight-gain related to the control |
|---|---|---|
| 4-{[4'-(Ethoxy)-3'-(methoxy)-phenyl]-thioxomethyl}-morpholine [Example 2] {of a composition according to the invention} | 126% | 85% |
| Flavomycine {comparative material} | 114% | 96% |
| Control | 100% | 100% |

From the above data it can be seen that the weight gain of the animals fed with a fodder produced by the use according to the invention containing a compound of formula I is significantly higher than that of the pigs of the comparative and control groups. At the same time the same weight gain can be achieved with a considerably smaller amount of fodder when a compound of formula I is incorporated into the animal feed. This is a proof of an improved fodder utilization.

A very important advantage of the N-[phenyl-(thioxomethyl)]-morpholine derivatives is that they are discharged from the animal organism more readily than the known weight-gain increasing compounds and they do not show any mutagenic effect. This fact constitutes a significant advantage when used in animal husbandry.

The toxicity of the compounds of the compositions used according to the invention on domestic animals is so low that the compounds are practically non-toxic.

Conveniently the compositions used according to the invention are fodder additives or concentrates, premixes or ready-for-use fodders having weight-gain increasing effect.

Advantageously the compositions used according to the invention contain the compound(s) of formula I and/or their acid addition salts as active ingredient(s) in an amount of 0.0001% to 85% by weight suitably in admixture with 1 or more inert edible solid and/or liquid carrier(s) and/or diluent(s) and optionally 1 or more additive(s) generally used in the production of fodder additives and fodders.

The fodder additives and concentrates, premixes and ready-for-use fodders can be prepared by admixing 1 or more compound(s) of formula I and/or acid addition salt(s) of it/them with 1 or more edible solid and/or liquid carrier(s) and/or diluent(s) and optionally with 1 or more additive(s) generally used in the production of fodder additives and fodders.

As carrier(s) conveniently any substance(s) of vegetable and/or animal origin applicable in the feeding of animals can be used. For this purpose particularly wheat, barley, bran, maize, soybean, oats, rye or alfalfa can be used in appropriate forms, such as grits, groats or meal, or fish meal, meat meal or bone meal, skimmed milk powder or tapioca meal or mixtures of these materials can be used as well. One may advantageously use a fiber-free green plant fodder concentrate with high protein content.

As additive(s) e.g. silicic acid, 1 or more antioxidant(s), starch, dicalcium phosphate, calcium carbonate and/or sorbic acid can be used. The starch(es) used may be e.g. wheat, maize and/or potato starch.

As wetting agent(s) e.g. 1 or more nontoxic oil(s), preferably soybean oil, maize oil and/or mineral oil, can be applied. Various alkylene glycols can also be used as wetting agent.

The content of the compositions used according to the invention of the compound(s) of formula I and/or their acid addition salts as active principle(s) may vary within wide ranges. The fodder additives and concentrates produced by the use according to the invention advantageously may contain about 5 to 80% by weight, preferably about 10 to 80% by weight, of the active ingredient(s) of formula I and/or their acid addition salts. The content of the active ingredient(s) of formula I and/or their acid addition salts of the animal fodders ready for use advantageously may be about 0.0001 to 0.04% by weight, preferably about 0.001 to 0.01% by weight. The fodder additives and concentrates produced by the use according to the invention advantageously may contain 1 or more usual vitamin(s), e.g. vitamin(s) A, B₁, B₂, B₃, B₆, B₁₂, E and/or K, and trace element(s), e.g. Mn, Fe, Zn, Cu and/or J, too.

The fodder additives and concentrates produced by the use according to the invention may be diluted with 1 or more suitable fodder component(s) or incorporated into suitable animal feeds to provide animal feeds ready for use.

The compositions used according to the present invention can be used for increasing the weight gain and improving feed utilization of various domestic animals, such as pigs, lambs, cattle and poultry, particularly pigs.

The compounds of formula I and/or their acid addition salts and the compositions used according to the invention can be applied by a method which comprises feeding the animals with these compounds or compositions.

Further details of the present invention are to be found in the following Examples. The melting points appearing in the Examples are not corrected.

### Example 1

### 4-{[4'-(Hydroxy)-3'-(methoxy)-phenyl]-thioxomethyl}-morpholine

104.5 g (1.5 mole) of morpholine, 32.0 g (1.0 mole) of powdered sulphur and 152.2 g (1.0 mole) of 4-(hydroxy)-3-(methoxy)-benzaldehyde are reacted at the boiling point of the reaction mixture (115°C) for 4 hours. The product is crystallized from ethanol.
Yield: 226.8 g (89.5 %) of yellow crystals,
M.p.: 167-168 °C.

| Analysis for the formula C₁₂H₁₅NO₃S (253.4): | | | | |
|---|---|---|---|---|
| calculated: | C%=56.87 | H%=5.97 | N%=5.56 | S%=12.65 |
| found: | C%=57.02 | H%=6.05 | N%=5.49 | S%=12,66. |

UV: λmax = 281 nm (=15442).

### Example 2

### 4-{[4'-(Ethoxy)-3'-(methoxy)-phenyl]-thioxomethyl}-morpholine

87.1 g (1.0 mole) of morpholine, 17.6 g (0.55 mole) of powdered sulphur and 90.1 g (0.5 mole) of 4-(ethoxy)-3-(methoxy)-benzaldehyde are reacted at the boiling point of the reaction mixture. When the aldehyde component can no longer be detected, the dark red oil is cooled and the product is crystallized from methanol.
Yield: 134.4 (95.5 %) of yellow lamellated crystals.
M.p.: 127-129 °C.

| Analysis for the formula C₁₄H₁₉NO₃S (281.4): | | | | |
|---|---|---|---|---|
| calculated: | C%=59.75 | H%=6.81 | N%=4.98 | S%=11.39 |
| found: | C%=59.46 | H%=6.75 | N%=5.07 | S%=11.45. |

UV λₘₐₓ = 281 nm ( =15232).

### Example 3

### 4-{[3',4',5'-Tri-(methoxy)-phenyl]-thioxomethyl}-morpholine

28.1 g (0.1 mole) of 4-{[3',4',5'-tri-(methoxy)-phenyl]-oxomethyl}-morpholine, 100 ml of pyridine and 22.3 g (0.1 mole) of phosphorus pentasulfide are reacted at the boiling point of the reaction mixture for 5 hours. Then the solvent is distilled off and the product is precipitated with water.
Yield: 25.9 g (87.5 %) of yellow crystals.
M.p.: 140-142 °C.

| Analysis for the formula C₁₄H₁₉NO₄S (297.3): | | | | |
|---|---|---|---|---|
| calculated: | C%=56.55 | H%=6.44 | N%=4.71 | S%=10.78 |
| found: | C%=56.69 | H%=6.40 | N%=4.72 | S%=10.65. |

UV λₘₐₓ = 245 and 280 nm (ε=8810 and 13434).

### Example 4

### 4-{[3',4'-Di-(methoxy)-phenyl]-thioxomethyl}-morpholine

A mixture of 25.1 g (0.1 mole) of 4-{[3',4'-di-(methoxy)-phenyl]-oxomethyl}-morpholine, 100 ml of pyridine and 22.3 g (0.1 mole) of diphosphorus pentasulfide is boiled for 8 hours. Then the solvent is removed in vacuo, the residue is poured into 300 g of icy water and the product is crystallized from ethanol.
Yield: 23.79 g (89.0 %) of yellow crystals.

| Analysis for the formula C₁₃H₁₇NO₃S (267.37): | | | | |
|---|---|---|---|---|
| calculated: | C%=58.4 | H%=6.41 | N%=5.24 | S%=11.99 |
| found: | C%=58.27 | H%=6.47 | N%=5.32 | S%=12,17. |

### Example 5

A premix for supplementing pig fodder is prepared with the following composition:

| Components | Amounts |
|---|---|
| Vitamin A | 3 000 000 NE |
| Vitamin D₃ | 600 000 NE |
| Vitamin E | 4 000 NE |
| Vitamin K₃ | 400 mg |
| Vitamin B₁ | 600 mg |
| Vitamin B₂ | 800 mg |
| Vitamin B₃ | 2 000 mg |
| Vitamin B₆ | 800 mg |
| Vitamin B₁₂ | 10 mg |
| Niacine | 4 000 mg |
| Choline chloride | 60 000 mg |
| Active principle 4-{[3',4'-Di-(methoxy)-phenyl]-thioxomethyl}-morpholine according to Example 4 | 10 000 mg |
| Butylhydroxytoluene (antioxidant) | 30 000 mg |
| Flavouring substances | 8 000 mg |
| Sodium saccharate | 30 000 mg |

| Trace elements: | |
|---|---|
| Mn | 8 000 mg |
| Fe | 30 000 mg |
| Zn | 20 000 mg |
| Cu | 6 000 mg |
| J | 1 000 mg |
| Twice-ground bran ad | 1 000 g |

This premix of vitamins and trace elements is admixed with the basal fodder having the composition of that of Example 7 (resulting by subtracting the amount of "premix according to Example 5" there) in a concentration of 0.5 kg per 100 kg.

### Example 6

A premix for supplementing piglet fodder is prepared with the following composition:

| Components | Amounts |
|---|---|
| Vitamin A | 1 200 000 NE |
| Vitamin D₃ | 300 000 NE |
| Vitamin E | 2 000 NE |
| Vitamin B₂ | 600 NE |
| Vitamin B₃ | 2 000 NE |
| Vitamin B₁₂ | 5 mg |
| Niacine | 3 000 mg |
| Choline chloride | 40 000 mg |
| Active principle 4-{[3',4'-Di-(methoxy)-phenyl]-thioxomethyl}-morpholine according to Example 4 | 10 000 mg |
| Butylhydroxytoluene (antioxidant) | 30 000 mg |

| Trace elements: | |
|---|---|
| Mn | 6 000 mg |
| Fe | 10 000 mg |
| Zn | 15 000 mg |
| Cu | 30 000 mg |
| J | 100 mg |
| Twice-ground bran ad | 1 000 g |

This premix of vitamins and trace elements is admixed with the basal fodder having the composition of that of Example 7 (resulting by subtracting the amount of "premix according to Example 5" there) in a concentration of 0.5 kg/100 kg.

### Example 7

0.5 kg of premix as described in Example 5 is admixed with a basal fodder to yield a total weight of 100.0 kg of the following composition:

| Components | Amounts, kg |
|---|---|
| Maize | 37.6 kg |
| Barley | 25.4 kg |
| Wheat | 6.0 kg |
| Oats | 5.0 kg |
| Soybean | 13.0 kg |
| Fish meal | 6.0 kg |
| Bran | 2.4 kg |
| Fat powder | 1.5 kg |
| Premix of minerals | 1.0 kg |
| Lime (fodder quality) | 1.0 kg |
| Sodium chloride (fodder quality) | 0.5 kg |
| Biolysine | 0.1 kg |
| Premix according to Example 5 | 0.5 kg |
| Total weight: | 1̅0̅0̅.̅0̅ k̅g̅ |

The active principle content of the resulting pig fodder is 0.005% by weight.

The composition of the premix of minerals is as follows:

| Components | Amounts, % by weight |
|---|---|
| Dicalcium phosphate | 55.0 |
| Monocalcium phosphate | 40.0 |
| Calcium carbonate | 5.0 |

### Example 8

0.5 kg of a premix as described in Example 6 is admixed with a basal fodder to yield a total weight of 100.0 kg of the following composition:

| Components | Amounts |
|---|---|
| Maize | 25.0 kg |
| Wheat | 34.0 kg |
| Extracted soybean | 18.0 kg |
| Milk powder | 9.9 kg |
| Fish meal | 4.0 kg |
| Yeast (fodder quality) | 2.0 kg |
| Fat powder | 3.4 kg |
| Premix of vitamins and trace elements according to Example 6 | 1.8 kg |
| Lime (fodder quality) | 1.0 kg |
| Sodium chloride (fodder quality) | 0.4 kg |
| Premix according to Example 6 | 0.5 kg |
| Total weight: | 100.0 kg |

The active principle content of the resulting piglet fodder is 0.005% by weight.

### Example 9

400 kg of a pre-ground soybean meal are filled into a mixer, 3.1 kg of soybean oil are added under stirring and the mixture is stirred until the solids get coated with oil. Thereafter 9.1 kg of the active principle according to Example 2 are added and the mixture is stirred until a homogeneous blend is obtained. Finally 9.0 kg of soybean oil are added and the mixture is homogenized again.

### Example 10

0.5 kg of the active principle according to Example 2 are added to 10 kg of corn meal under stirring, and simultaneously propylene glycol is sprayed into the mixture. Thereafter 1.4 kg of dicalcium phosphate are added and the mixture is homogenized.

### Example 11

10 kg of alfalfa meal and 15 kg of a fiber-free lucerne fodder concentrate with high protein content are stirred for 20 hours, thereafter spraying of 1 kg of maize oil into the mixture is started with an uniform speed so that spraying is continued during the introduction of the following additional components: 2.5 kg of the active principle according to Example 1, 10 kg of maize starch, 0.3 kg of silicon dioxide, 0,6 kg of ascorbic acid, 9 kg of maize starch and 2.5 kg of the above active principle. The mixture thus obtained is stirred for additional 5 minutes.

### Example 12

One proceeds as described in Example 9 with the difference that 1,4-butyleneglycol is applied as wetting agent instead of soybean oil.

### Example 13

A) 3.5 kg of potato starch are admixed with 2.9 kg of the active principle according to Example 2. 0.05 kg of mineral oil are sprayed into the mixture, thereafter 0.2 kg of sorbic acid, 0.4 kg of silicon dioxide and 0.1 kg of calcium propionate are added, and the mixture is stirred for additional 2 minutes.
B) 4.2 kg of fish meal are admixed with 22 kg of rye bran. 0.6 kg of mineral oil are sprayed into the mixture, thereafter 4 kg of a mixture prepared according to point A), 10 kg of maize meal, 4 kg of a mixture prepared according to point A) and 9 kg of maize meal are introduced under stirring. Finally 0.6 kg of mineral oil are sprayed into the mixture.

### Example 14

100 kg of wheat bran, 10 kg of the active principle according to Example 3, 2.5 kg of calcium carbonate, 0.15 kg of α-tocopherol and 0.4 kg of calcium propionate are homogenized with 4 kg of propylene glycol.

### Example 15

10 kg of soybean meal and 0.6 kg of the active principle according to Example 3 are homogenized with 2.5 kg of 1,4-butylene glycol.

### Example 16

50 kg of soybean meal, 6 kg of the active principle according to Example 4, 0.5 kg of silicon dioxide, 1.6 kg of soybean oil and 0.2 kg of calcium propionate are homogenized.

## Claims

1. The use of compositions, characterized in that they contain 1 or more substituted N-[phenyl-(thioxomethyl)]-morpholine derivative(s) of the general formula 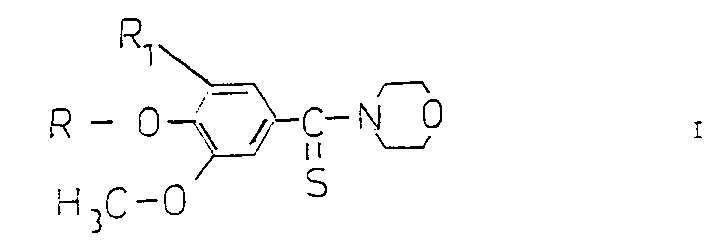 wherein
R₁ represents methoxy or hydrogen and
R stands for methyl
or
R and R₁ each denotes hydrogen
or
R₁ stands for hydrogen and
R represents ethyl,
and/or acid addition salt(s) thereof as active ingredient(s) in admixture with 1 or more inert solid and/or liquid carriers(s) and/or diluent(s) and optionally 1 or more additive(s), for the production of fodder additives and fodders.

2. The use of compositions according to claim 1, characterized in that they contain a compound of formula V

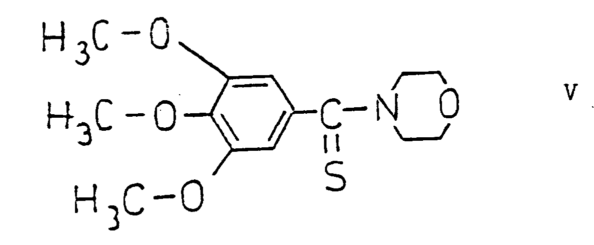

3. The use of compositions according to claim 1 or 2, characterized in that they contain a compound of formula VI

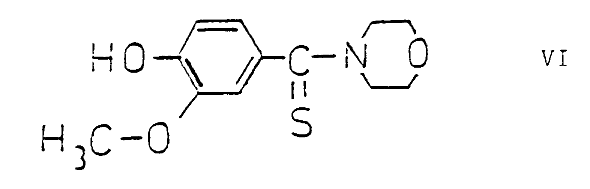

4. The use of compositions according to claims 1 to 3, characterized in that they contain a compound of formula VII

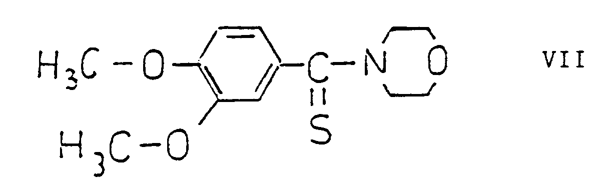

5. The use of compositions according to claim 1 to 4, characterized in that they contain a compound of formula VIII

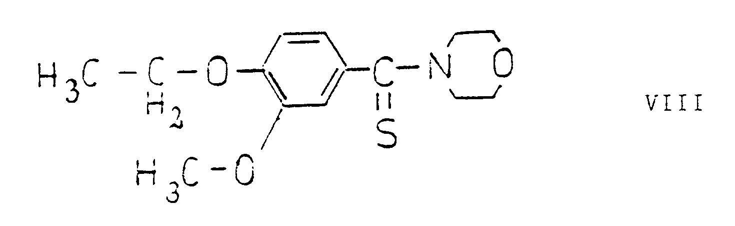

6. The use of compositions according to any of claims 1 to 5, in the form of feed additives or concentrates, premixes or ready-for-use fodders.

7. The use of compositions according to any of claims 1 to 6, characterized in that they contain as carrier(s) such one(s) of vegetable and/or animal origin applicable in the feeding of animals and/or serving as fodder, particularly wheat, barley, bran, maize, soybean, oats, rye or alfalfa in the form of grits, groats or meal or fish meal, meat meal, bone meal, skimmed milk powder or tapioca or mixtures of these materials.

8. The use of the compounds of the general formula I and/or acid addition salts thereof or of the compositions according to claims 1 to 7, for increasing the weight gain and improving the feed utilization of domestic animals.

## Patentansprüche

1. Die Verwendung von Kompositionen, dadurch gekennzeichnet, daß diese 1 oder mehr substituierte N-[Phenyl-(thioxomethyl)]-morpholin-Derivat(e) der allgemeinen Formel 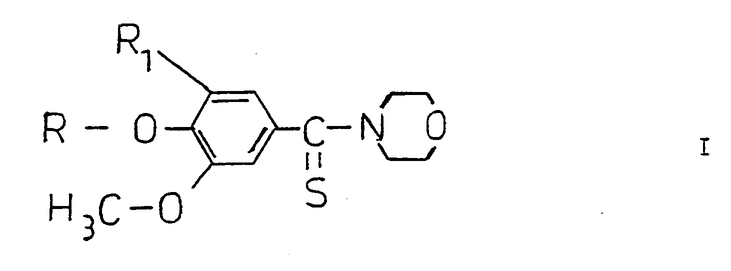 worin
R₁ Methoxy oder Wasserstoff darstellt und
R für Methyl steht
oder
R und R₁ jeweils Wasserstoff bezeichnen
oder
R₁ für Wasserstoff steht und
R Ethyl darstellt,
und/oder Säureadditionssalz(e) derselben als Wirkstoff(e) in Mischung mit 1 oder mehr inerten festen und/oder flüssigen Träger(n) und/oder Verdünnungsmittel(n) und gegebenenfalls 1 oder mehr Zusatzstoff(en) enthalten, zur Herstellung von Futtermittelzusätzen und Futtermitteln.

2. Die Verwendung von Kompositionen nach Anspruch 1, dadurch gekennzeichnet, daß sie eine Verbindung der Formel V 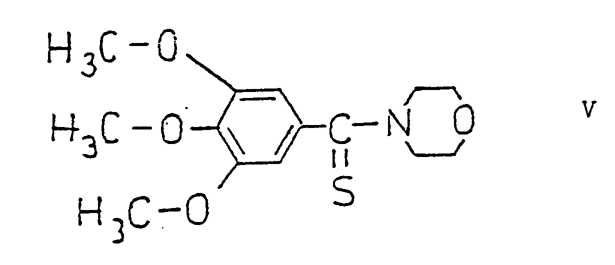 enthalten.

3. Die Verwendung von Kompositionen nach Anspruch 1 oder 2, dadurch gekennzeichnet, daß sie eine Verbindung der Formel VI 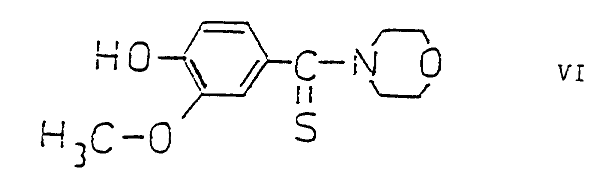 enthalten.

4. Die Verwendung von Kompositionen nach Ansprüchen 1 bis 3, dadurch gekennzeichnet, daß sie eine Verbindung der Formel VII 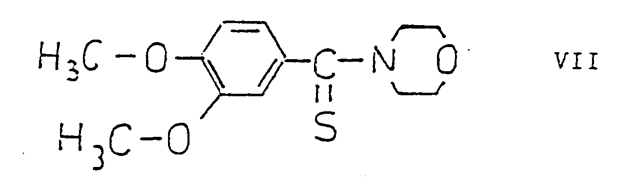 enthalten.

5. Die Verwendung von Kompositionen nach Ansprüchen 1 bis 4, dadurch gekennzeichnet, daß sie eine Verbindung der Formel VIII 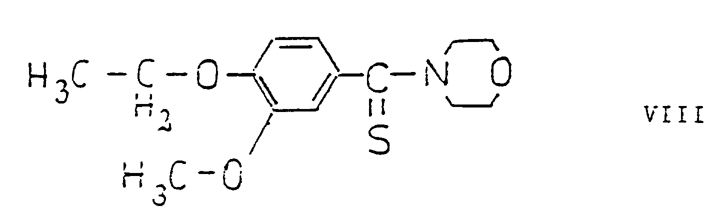 enthalten.

6. Die Verwendung von Kompositionen nach einem der Ansprüche 1 bis 5 in Form von Futtermittelzusätzen oder -konzentraten, Premixen oder anwendungsfertigen Futtermitteln.

7. Die Verwendung von Kompositionen nach einem der Ansprüche 1 bis 6, dadurch gekennzeichnet, daß sie als Trägerstoff(e) [einen] solche[n] pflanzlichen und/oder tierischen Ursprungs anwendbar beim Füttern von Tieren und/oder als Futtermittel dienend, vorzugsweise Weizen, Gerste, Kleie, Mais, Soja, Hafer, Roggen oder Luzerne in Form von Grieß, Grütze oder Mehl oder Fischmehl, Fleischmehl, Knochenmehl, Magermilchpulver oder Tapioka oder Gemische dieser Materialien enthalten.

8. Verwendung der Verbindungen der allgemeinen Formel I und/oder ihrer Säureadditionssalze oder Kompositionen nach Ansprüchen 1 bis 7 zur Steigerung der Gewichtszunahme und Verbesserung der Futterverwertung von Nutztieren.

## Revendications

1. Utilisation de compositions, caractérisées en ce qu'elles contiennent un ou plusieurs dérivé(s) substitué(s) de N-[phényl-(thioxométhyl)]-morpholine de formule générale 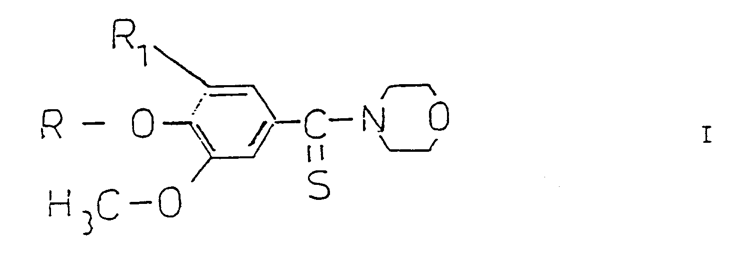 dans laquelle:
R₁ représente un groupe méthoxy ou un atome d'hydrogène, et
R représente un groupe méthyle,
ou
R et R₁ représentent chacun un atome d'hydrogène,
ou
R₁ représente un atome d'hydrogène, et
R représente un groupe éthyle,
et/ou un ou plusieurs sel(s) d'addition d'acide en dérivant en tant qu'ingrédient(s) actif(s) en mélange avec un ou plusieurs diluant(s) et/ou supports liquides et/ou solides inertes et éventuellement un ou plusieurs additif(s), pour la production d'additifs pour aliments pour bétail et d'aliments pour bétail.

2. L'utilisation des compositions selon la revendication 1, caractérisées en ce qu'elles contiennent un dérivé de formule V

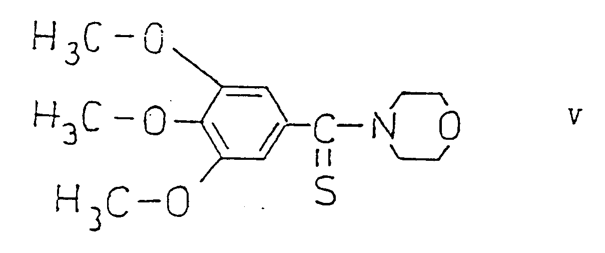

3. L'utilisation des compositions selon la revendication 1 ou la revendication 2, caractérisées en ce qu'elles contiennent un dérivé de formule VI

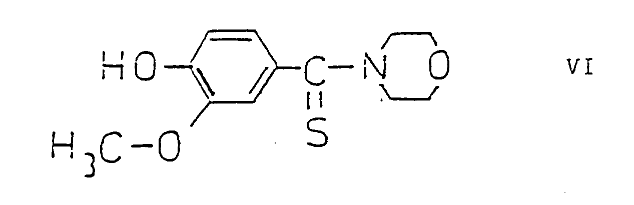

4. L'utilisation des compositions selon les revendications 1 à 3, caractérisées en ce qu'elles contiennent un dérivé de formule VII

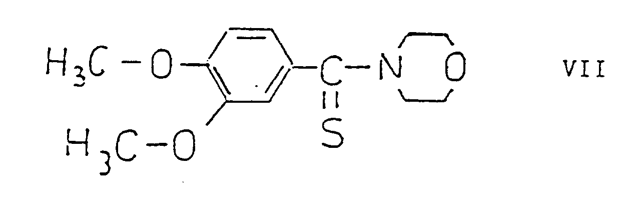

5. L'utilisation des compositions selon les revendications 1 à 4, caractérisées en ce qu'elles contiennent un dérivé de formule VIII

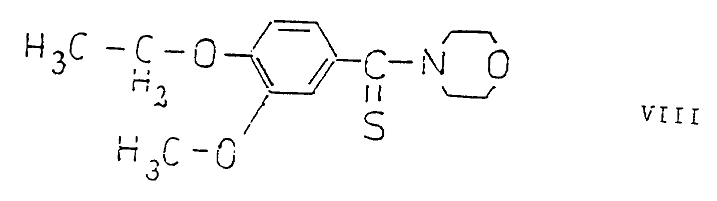

6. L'utilisation des compositions selon l'une quelconque des revendications 1 à 5, sous forme d'additifs ou de concentrés alimentaires d'aliments pour le bétail prémélangés ou prêts à l'usage.

7. L'utilisation des compositions selon l'une quelconque des revendications 1 à 6, caractérisées en ce qu'elles contiennent en tant que support(s) un ou plusieurs support(s) tels que ceux d'origine animale et/ou végétale utilisables dans les aliments pour animaux et/ou pouvant servir d'aliments pour le bétail, particulièrement du froment, de l'orge, du son, du maïs, des graines de soja, de l'avoine, du seigle ou de la luzerne sous forme de gruau, de grosse farine ou de farine ou de la farine de poisson, de la farine de viande, de la farine d'os, de la poudre de lait écrémé ou du tapioca et des mélanges de ces matières.

8. L'utilisation des composés de formule générale I et/ou de leurs sels d'addition d'acide ou des compositions selon les revendications 1 à 7, pour augmenter le gain de poids et améliorer l'utilisation de la nourriture des animaux domestiques.
